# EUROPEAN PATENT APPLICATION

(11) **EP 2 179 817 A1**
(43) Date of publication of application: **28.04.2010**
(21) Application number: 09011816.7
(22) Date of filing: 16.09.2009
(51) Int. Cl.: B23Q 16/10

(54) **Clamping device of indexing device for machine tool**

(30) Priority: 24.10.2008 JP 2008274580
(71) Applicant: TSUDAKOMA KOGYO KABUSHIKI KAISHA, Kanazawa-shi, Ishikawa-ken 921-8650 (JP)
(72) Inventor: Nishida, Youichi, Kanazawa-shi Ishikawa-ken 921-8650 (JP)
(74) Representative: Samson & Partner

(57) **Abstract**

A clamping device (6) for holding an indexed angular position of a main shaft (2) includes a clamp section (20) non-rotatable relative to the main shaft, and a pressing mechanism (40) including a clamp piston (42) displaceable in an axial direction of the main shaft and causing a fluid pressure received by the clamp piston to act on the clamp section. The clamp section includes a first clamp portion (21) being non-rotatable relative to the main shaft, and a second clamp portion (31) being rotatable with the main shaft. The pressing mechanism includes first and second pressing portions (43, 44) which respectively press the first and second clamp portions. The second clamp portion or the second pressing portion is elastically displaced when the clamp piston advances by the fluid pressure. Forces in axial and radial directions are respectively applied to the first and second clamp portions, thereby clamping the main shaft.

## Description

### BACKGROUND OF THE INVENTION

### 1. Field of the Invention

The present invention relates to a clamping device of an indexing device for a machine tool.

### 2. Description of the Related Art

An indexing device for a machine tool may be, for example, a rotary table device (also referred to as rotary table or index table). A rotary table device typically includes a clamping device to hold an indexed angular position of a main shaft. Hitherto, three types of clamping devices have been provided for such a rotary table device.

A first type is sleeve clamp type. A sleeve is arranged to surround the outside of a main shaft. Operating fluid is supplied to the outside of the sleeve. Hence, a thin-wall section of the sleeve is deformed and the thin-wall section presses the main shaft, to hold the phase of the main shaft (Japanese Unexamined Patent Application Publication No. 2006-35391).

A second type is disk clamp type. This type includes a clamp disk protruding from a main shaft and integrally arranged around the main shaft, a clamp piston displaceable in an axial direction relative to a surface to be clamped at one side of the clamp disk, and a frame-side clamp surface facing a surface to be clamped at another side of the clamp disk far from the clamp piston. Operating fluid is supplied to a pressing mechanism including the clamp piston. A pressing portion of the clamp piston presses the clamp disk. Consequently, the clamp surface and the pressing portion clamp the clamp disk, to hold the phase of the main shaft (Japanese Utility Model Registration Application Publication No. 6-42047).

A third type is coupling type. This type includes a first fixed coupling member fixed to a frame, a second fixed coupling member fixed to a main shaft, and a movable coupling member capable of being advanced or retracted in an axial direction relative to both coupling members. Each of the coupling members has indexing teeth for engagement. Also, a piston member is provided to cause the movable coupling member to be advanced or retracted (displaced) in the axial direction. When the piston member causes the movable coupling member to be advanced toward the fixed coupling members, the index teeth engage with the fixed coupling members, and hence, the phase of a main shaft is held (Japanese Unexamined Patent Application Publication No. 7-256538).

Clamping devices of the above-mentioned three types involve the following problems. Hence, none of these clamping devices is sufficient in view of versatility.

In the case of sleeve clamp type, a clamping torque (i.e., a force to hold the main shaft, also called "clamping force" hereinafter) depends on a diameter and an axial length of a clamp surface (i.e., a surface at which the thin-wall section applies a force to the main shaft).

To obtain a large clamping force, dimensions in radial and axial directions of the clamp surface and the sleeve have to be increased, resulting in the size of the device being increased. Since a rotary table device is mounted on a machine tool such as a machining center, the dimensions in the radial and axial directions are limited on account of an installation space of the rotary table device on the machine tool. Accordingly, it is actually difficult to increase the clamping torque.

If the clamping torque is small, the clamping torque is not applicable to heavy processing because it is difficult to hold an indexed position of a circular table during heavy processing with a large moment load (i.e., load in a rotational direction which acts by processing of a workpiece).

In the case of disk clamp type, a clamp torque depends on a diameter of the clamp disk and a pressing force of the clamp piston. To obtain a large clamping force, the device may be increased in size similarly. In addition, even when the device is increased in size to obtain a large clamping force, the clamping device, in particular, the clamp disk has a low rigidity against the moment load of the clamp disk. It is difficult to stably hold the indexed position of the circular table. Similarly to the sleeve clamp type, the clamping force cannot be applied to heavy processing.

In the case of coupling type, holding is provided by engagement of the indexing teeth. The indexed position is completely fixed. Also, rigidity against the moment load of the device is high. However, indexed angles depend on the number of indexing teeth. Indexing of the circular table at a desired angle is not available. Hence, a processing surface is limited.

The above-mentioned problems may be applied to other indexing devices for machine tools, in addition to the rotary table devices. An example may be a spindle head in which a spindle is supported via a support shaft which is rotationally driven, and the angular position of the spindle is indexed (US Patent No. 5584621).

### SUMMARY OF THE INVENTION

The present invention is developed in light of the situations, and an object of the present invention is to provide a clamping device capable of providing indexing at a desired angle while providing a high rigidity and a large clamping torque.

An aspect of the present invention basically relates to a clamping device of an indexing device for a machine tool, the clamping device being configured to hold an indexed angular position of a main shaft. The clamping device includes a clamp section being non-rotatable relative to a main shaft which is rotationally driven, and a pressing mechanism including a clamp piston which is displaceable in an axial direction of the main shaft, and being configured to cause a pressure of operating fluid received by the clamp piston to act on the clamp section.

The clamp section includes a clamp disk being non-rotatable relative to the main shaft, and serving as a first clamp portion, and a second clamp portion being part of the main shaft or a member rotatable with the main shaft, and having a pressure receiving surface extending in a direction intersecting with a radial direction of the main shaft. The pressing mechanism includes a first pressing portion facing the clamp disk and arranged between the clamp piston and the clamp disk, and a second pressing portion facing the pressure receiving surface of the second clamp portion and arranged between the clamp piston and the second clamp portion. One of the second clamp portion and the second pressing portion of the pressing mechanism, which are brought into a contact state when the clamp piston receives the pressure of the operating fluid, includes a pressing force conversion portion which generates a pressing force in the radial direction of the main shaft to be applied to the pressure receiving surface of the second clamp portion when the pressing force conversion portion receives a pressing force in the axial direction acting thereon via the clamp piston. At least one of the second clamp portion and the second pressing portion is elastically displaceable to permit the clamp piston to be displaced in the axial direction when the second pressing portion causes a pressing force to act on the second clamp portion.

With the aspect of the present invention, the pressure of the operating fluid received by the clamp piston of the pressing mechanism acts on the pressure receiving surface of the second clamp portion via the second pressing portion. At this time, the pressure receiving surface of the second clamp portion receives a pressing force in a direction (radial direction of the main shaft, hereinafter, referred to as "radial direction") orthogonal the pressure in the axial direction of the main shaft (hereinafter, referred to as "axial direction") of the operating fluid received by the clamp piston, by action of the pressing force conversion portion.

Further, since at least one of the second clamp portion and the second pressing portion is elastically displaceable to permit the clamp piston to be displaced in the axial direction when the second pressing portion causes a pressing force to act on the second clamp portion, the clamp piston is further displaced in the axial direction when receiving the pressure of the operating fluid, from the state where the second pressing portion is in contact with the second clamp portion. When rigid bodies contact with each other, further displacement is not provided. However, since at least one of the second pressing portion and the second clamp portion, which are in the contact state, is elastically displaceable when the pressing force is increased, the displacement of the clamp piston is permitted.

By further displacing the clamp piston, the pressing force in the axial direction acts on the clamp disk via the first pressing portion arranged between the clamp piston and the clamp disk.

With the aspect of the present invention, the two pressing forces in the radial and axial directions simultaneously act on the clamp section which rotates with the main shaft. Accordingly, a rigid clamping force can be provided. In addition, unlike a configuration in which clamping is provided only by a clamp disk, sufficient rigidity can be provided for a moment load, and indexing at a desired angle can be provided. No limitation is necessary for index angles unlike the coupling type.

Further, with the aspect of the present invention, the two pressing forces in the radial and axial directions are simultaneously generated by the operation of the single clamp piston. Accordingly, the configuration is simplified as compared with a configuration in which two types of clamping devices are combined.

### BRIEF DESCRIPTION OF THE DRAWINGS

Fig. 1 is a cross-sectional view showing an entire rotary table device;
Fig. 2 is an enlarged cross-sectional view showing one side of a clamping device of the rotary table device;
Fig. 3A is a vector diagram showing a transmission state of a force in the example shown in Fig. 1;
Fig. 3B is a vector diagram showing a transmission state of a force in a modification of the example shown in Fig. 1;
Fig. 4 is an enlarged cross-sectional view showing one side of a clamping device of another example;
Fig. 5 is an enlarged cross-sectional view showing one side of a clamping device of still another example; and
Fig. 6 is an enlarged cross-sectional view showing one side of a clamping device of yet another example.

### DESCRIPTION OF THE PREFERRED EMBODIMENTS

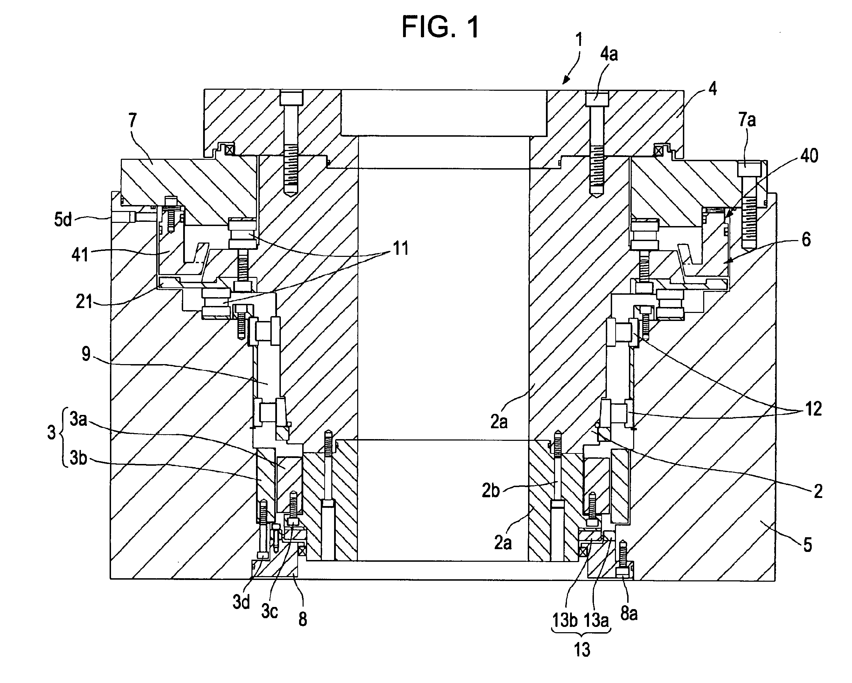

Fig. 1 illustrates a rotary table device 1 capable of indexing a desired rotational angle of a rotary shaft 2 (main shaft), as an example of an indexing device for a machine tool, to which the present invention is applied. The rotary table device 1 shown in Fig. 1 is an example which employs a driving mechanism using as a drive source a direct drive motor (hereinafter, referred to as "DD motor") 3 which does not use a speed reduction mechanism such as a gear. In an indexing device to which the present invention is applied, a worm wheel may be rotationally driven by a worm gear, the worm wheel being attached to the rotary shaft (main shaft) 2 so that the worm wheel is non-rotatable relative to the rotary shaft 2, the worm gear being provided around a drive shaft which is rotated by, for example, a drive motor.

The rotary table device 1 shown in Fig. 1 includes a circular table 4 on which a workpiece is mounted, the rotary shaft 2 which supports the circular table 4, a frame 5 rotatably supporting the rotary shaft 2, the DD motor 3 housed between the frame 5 and the rotary shaft 2, and a clamping device 6 housed between the frame 5 and the rotary shaft 2. When the DD motor 3 is driven, the circular table 4 is rotated with the rotary shaft 2 relative to the frame 5, around an axis line of the rotary shaft 2, so that an angular position of the circular table 4 is indexed. When the clamping device 6 is operated, the rotary shaft 2 is clamped, so that the angular position of the circular table 4 indexed by the above-mentioned rotation is held. Respective components will be described below in more detail.

The circular table 4 allows a workpiece (or a jig to which a workpiece is attached) to be mounted on a surface of the circular table 4 and holds the workpiece. The circular table 4 is attached to the rotary shaft 2 (main shaft) provided at a rear surface side of the circular table 4 such that an axis line of the circular table 4 is aligned with an axis line of the rotary shaft 2. A plurality of screw members 4a are screwed into the circular table 4 at a plurality of positions at regular intervals on a circumference around the axis line of the circular table 4. The circular table 4 is fixed to one end of the rotary shaft 2 by the screw members 4a.

In the illustrated example, the rotary shaft 2 is formed of two shaft members 2a, 2a, which are assembled such that axis lines of the shaft members 2a, 2a are aligned with each other, and coupled by screw members 2b.

The frame 5 serves as a base of the rotary table device 1. The frame 5 has a through hole for receiving and supporting the rotary shaft 2. The through hole has a size to provide a circular space 9 between the frame 5 and the rotary shaft 2 while the through hole receives the rotary shaft 2. The through hole is formed such that the diameter of the space 9 is increased stepwise toward the circular table 4. Accordingly, a step portion 5a is formed in the space 9, at part of the frame 5 near the circular table 4. A front cover 7 and a rear cover 8 are attached to the frame 5. The front cover 7 closes an opening near the circular table 4 of the space 9 provided with the step portion 5a. The rear cover 8 closes an opening of the space 9 far from the circular table 4. The front cover 7 and the rear cover 8 are ring-like members surrounding the rotary shaft 2. Inner peripheral portions of the front and rear covers 7 and 8 are arranged close to an outer peripheral surface of the rotary shaft 2, and outer peripheral portions of the front and rear covers 7 and 8 are coupled to the frame 5 by screw members 7a, 8a. Hence, the front cover 7 and the rear cover 8 may be part of the frame 5. The outer peripheral portion of the front cover 7 is located at a rear surface of an outer peripheral portion of the circular table 4.

In the space 9, axial bearings 11, radial bearings 12, and a rotation detector 13 are provided in addition to the DD motor 3 and the clamping device 6. The radial bearings 12 are arranged between the shaft member 2a of the rotary shaft 2 and the frame 5. The radial bearings 12, in association with the axial bearings 11, cause the rotary shaft 2 to be supported by the frame 5 rotatably relative to the frame 5.

The DD motor 3 rotationally drives the rotary shaft 2. The DD motor 3 includes a stator 3b and a rotor 3a. The DD motor 3 is inner rotor type, in which the stator 3b surrounds an outer peripheral surface of the rotor 3a. The stator 3b is formed by winding a coil around a fixed iron core. The rotor 3a is coaxially arranged with the stator 3b and includes a plurality of magnets which are arranged along a circumferential direction and which face an inner peripheral surface of the stator 3b at close positions to the inner peripheral surface. The rotor 3a is coupled to the rotary shaft 2 by screw members 3c. The stator 3b is coupled to the frame 5 by screw members 3d.

The rotation detector 13 includes an encoder 13a which detects the amount of rotation of the rotary shaft 2, and an object to be detected 13b which is detected by the encoder 13a. The encoder 13a provided at the frame 5 detects the object to be detected 13b provided at the rotary shaft 2. The amount of rotation of the rotary shaft 2 is detected on the basis of a detection signal from the encoder 13a.

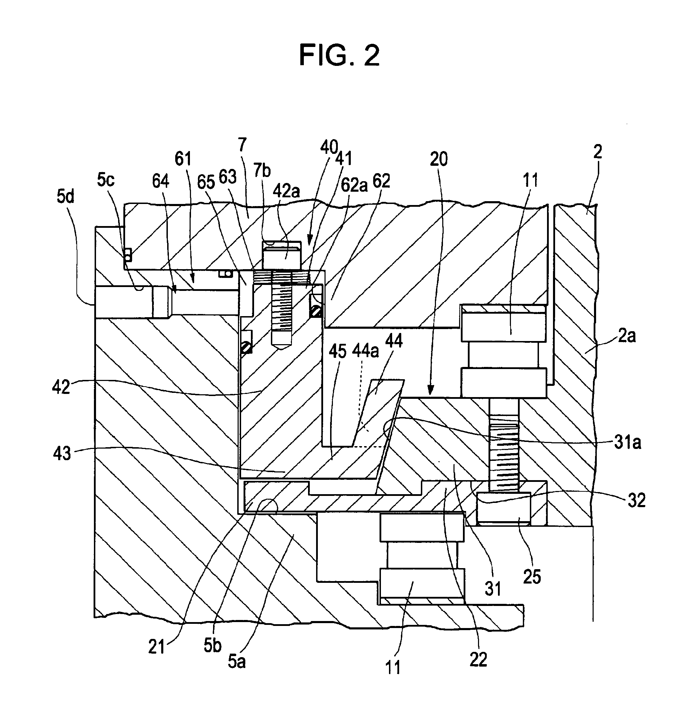

Referring to Fig. 1 or 2, the clamping device 6 includes a clamp section 20 non-rotatable relative to the rotary shaft 2 which is rotationally driven, and a pressing mechanism 40 which causes a pressing force to act in an axial direction by moving a clamp piston 42 toward the clamp section 20 by a pressure of operating fluid.

The clamping device 6 of this example clamps the rotary shaft 2 by pressing forces in a plurality of directions. Here, the pressing forces in the plurality of directions include a pressing force in the axial direction and a pressing force in a direction (radial direction) orthogonal to the axial direction. Hence, one of the clamp section 20 and the pressing mechanism 40 includes a pressing force conversion portion which generates the pressing force in the radial direction from the pressing force in the axial direction. In addition, at least part of one of the clamp section 20 and the pressing mechanism 40 is elastically displaceable to permit the clamp piston 42 to be displaced (moved) in the axial direction by the pressing mechanism 40 and to receive the pressing force in the axial direction while the clamp section 20 receives the pressing force in the radial direction. The configuration will be described below in more detail.

The clamp section 20 includes a clamp disk 21 (first clamp portion) which receives a pressure in the axial direction, and a second clamp portion 31 which receives a pressure in the radial direction. The clamp disk 21 and the second clamp portion 31 protrude outward in the radial direction like flanges from the shaft member 2a of the rotary shaft 2. The clamp disk 21 has a diameter larger than that of the second clamp portion 31. Hence, an outer peripheral portion of the clamp disk 21 protrudes outward as compared with the second clamp portion 31. The clamp disk 21 and the second clamp portion 31 are overlapped with each other in a range of the second clamp portion 31. The part where the clamp disk 21 and the second clamp portion 31 are overlapped with each other is supported by the frame 5 and the front cover 7 via the axial bearings 11 at both outer sides of that part in the axial direction.

Here, it is assumed that one of both surfaces in the axial direction of the clamp disk 21 near the second clamp portion 31 is called A surface, and the other surface is called B surface. To express the positional relationship in the axial direction, with reference to the clamp disk 21, a side near the clamp disk 21 is an inner side in the axial direction, and a side far from the clamp disk 21 is an outer side in the axial direction.

In the illustrated example, the second clamp portion 31 is integrally provided with the rotary shaft 2. In particular, the rotary shaft 2 has a configuration in which the shaft member 2a supported to the frame 5 via the radial bearings 12 is integrally provided with a flange-like large-diameter portion extending from the shaft member 2a in the radial direction. The large-diameter portion functions as the second clamp portion 31. An outer peripheral surface of the large-diameter portion (second clamp portion 31) is a pressure receiving surface 31a extending in a direction intersecting with the radial direction of the rotary shaft 2. In the illustrated example, the pressure receiving surface 31a is tapered such that the diameter thereof is increased inward in the axial direction.

The clamp disk 21 is a ring-like flat plate provided separately from the rotary shaft 2. The clamp disk 21 fits around the outer peripheral surface of the rotary shaft 2. The A surface at an inner peripheral portion of the clamp disk 21 faces an inner surface in the axial direction of the second clamp portion 31.

At the part where the clamp disk 21 is overlapped with the second clamp portion 31, the second clamp portion 31 has a recess 32 along the circumferential direction whereas the clamp disk 21 has a protrusion 22 along the circumferential direction. The protrusion 22 of the clamp disk 21 fits into the recess 32 of the second clamp portion 31. Further, screw members 25 are screwed through the fitted part in the axial direction at a plurality of positions along the circumferential direction. Hence, the clamp disk 21 is coupled to the second clamp portion 31. Accordingly, the clamp disk 21 is relatively non-rotatably assembled with the rotary shaft 2 via the second clamp portion 31.

The step portion 5a formed in the through hole of the frame 5 has multiple steps. An inner surface in the axial direction at the outermost step in the radial direction faces the B surface at the outer peripheral portion of the clamp disk 21. The surface serves as a clamp surface 5b which receives a pressing force acting on the clamp disk 21.

The pressing mechanism 40 includes a piston member 41 and a reciprocating device 61. The piston member 41 causes a pressing force to act on the clamp disk 21 and the second clamp portion 31. The reciprocating device 61 causes the piston member 41 to reciprocate.

The piston member 41 is a ring-like member provided coaxially with the rotary shaft 2. The piston member 41 is arranged at the A-surface side of the outer peripheral portion of the clamp disk 21, at the outside of the second clamp portion 31 in the radial direction. The piston member 41 includes the clamp piston 42, a first pressing portion 43, a second pressing portion 44, and a ring-like coupling portion 45. The clamp piston 42 reciprocates in the axial direction. The first pressing portion 43 is an inner end part in the axial direction of the clamp piston 42. The second pressing portion 44 is cylindrical and extends in the axial direction, the second pressing portion 44 provided at the inside in the radial direction with respect to the first pressing portion 43 in a manner separated from the first pressing portion 43. The coupling portion 45 couples the first and second pressing portions 43 and 44 together in the radial direction. In particular, the coupling portion 45 couples an inner end part in the axial direction of the second pressing portion 44 with the first pressing portion 43. As described above, in the illustrated example, the clamp piston, the first pressing portion, and the second pressing portion are integrally provided, and is provided as part of the piston member 41.

The first pressing portion 43 presses the A surface of the outer peripheral portion of the clamp disk 21 in the axial direction. The first pressing portion 43 faces the A surface of the clamp disk 21 in a manner separated from the A surface. That is, the first pressing portion 43 is arranged between the clamp piston 42 and the clamp disk 21.

The second pressing portion 44 presses the second clamp portion 31 in the direction intersecting with the axial direction. The second pressing portion 44 has flexibility to be elastically displaceable. The second pressing portion 44 is cylindrical and extends in the axial direction to surround the pressure receiving surface 31a of the second clamp portion 31. That is, the second pressing portion 44 is arranged between the clamp piston 42 and the second clamp piston 31.

The inner peripheral surface of the second pressing portion 44 is tapered such that the diameter of the inner peripheral surface is increased inward in the axial direction. Also, the outer peripheral surface of the second pressing portion 44 is tapered in a similar manner to the inner peripheral surface. The inner and outer peripheral surfaces of the second pressing portion 44 have taper angles (angles with respect to the axis line of the rotary shaft 2) which are slightly larger than a taper angle of the pressure receiving surface 31a of the second clamp portion 31. That is, in a state where an outer part in the axial direction of the inner peripheral surface is in contact with the pressure receiving surface 31a of the second clamp portion 31, a gap is generated between an inner part in the axial direction of the inner peripheral surface and the pressure receiving surface 31a of the second clamp portion 31.

Also, a plurality of slits 44a are radially provided at the second pressing portion 44 at regular intervals in the circumferential direction. The slits 44a penetrate from the inner peripheral surface to the outer peripheral surface. The slits 44a extend from an outer end surface in the axial direction of the second pressing portion 44 to an outer plane in the axial direction of the coupling portion 45. Thus, the slits 44a are open to the outside in the axial direction. With the slits 44a, the second pressing portion 44 is easily bent and easily elastically displaceable (deformable).

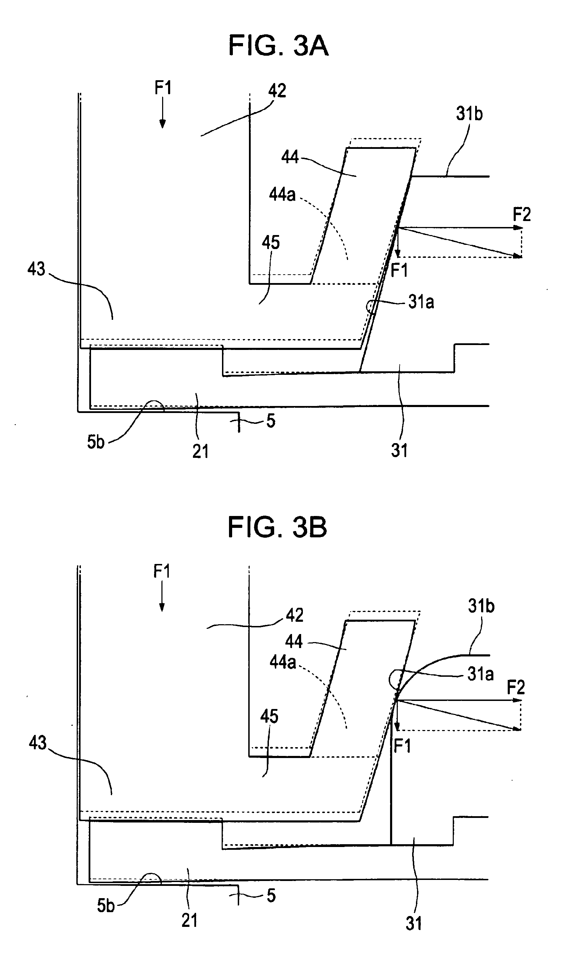

One of the second clamp portion 31 of the clamp section 20 and the second pressing portion 44 of the piston member 41 of the pressing mechanism 40 includes a pressing force conversion portion which generates the pressing force in the radial direction from the pressing force in the axial direction. In the illustrated example, the pressing force conversion portion is the outer peripheral surface of the second clamp portion 31, that is, the tapered pressure receiving surface 31a. In particular, the second pressing portion 44 of the pressing mechanism 40 is pressed to the pressure receiving surface 31a of the second clamp portion 31 when the clamp piston 42 receives a pressure of operating fluid. Hence, the second pressing portion 44 causes a pressing force in the axial direction to act on the pressure receiving surface 31a. Since the pressure receiving surface 31a is a tapered surface, the tapered surface provides cam action (wedge effect). Hence, as shown in Fig. 3A, when a pressing force F1 in the axial direction is applied, an increased pressing force F2 acting in the radial direction is generated to be applied to the second clamp portion 31. Thusly, the pressure receiving surface 31a corresponds to the pressing force conversion portion.

As described above, the second clamp portion 31 generates the increased pressing force F2 in the radial direction by receiving the pressing force F1 in the axial direction from the second pressing portion 44. That is, the clamp section 20 (second clamp portion 31) has a configuration (part) having force increasing action, i.e., the clamp section 20 has a force increasing portion.

The reciprocating device 61 includes a cylinder 62, a return spring 63, and a fluid pressure circuit 64. The cylinder 62 is displaceable in the axial direction when the piston member 41 is inserted. The return spring 63 constantly biases the piston member 41 outward in the axial direction. The fluid pressure circuit 64 acquires operating fluid into the cylinder 62.

The cylinder 62 is formed of the front cover 7 and the frame 5. An outer side in the axial direction of the cylinder 62 is closed whereas an inner side in the axial direction thereof is open. A guide groove 62a is defined by inner and outer peripheral surfaces in the radial direction of the cylinder 62, the inner and outer peripheral surfaces extending in the axial direction, and an inner surface in the axial direction of the front cover 7. The guide groove 62a guides the displacement in the axial direction of the clamp piston 42 of the piston member 41. Since the guide groove 62a guides the displacement in the axial direction of the clamp piston 42, the guide groove 62a is provided to surround an outer end part in the axial direction of the clamp piston 42.

The return spring 63 is a tension spring. A plurality of return springs 63 are provided at positions in the circumferential direction and arranged between an outer end surface in the axial direction of the clamp piston 42 and the front cover 7. A shaft part of a screw member 42a penetrates through each return spring 63 and is screwed into the clamp piston 42. A head part of the screw member 42a protrudes outward in the axial direction with respect to the return spring 63. The front cover 7 has a restriction hole 7b. The head part is loosely fitted into the restriction hole 7b. When the head part reaches the bottom of the restriction hole 7b, a retraction position of the clamp piston 42 is restricted.

The fluid pressure circuit 64 includes a pressure chamber 65 and a supply tube 5c. The pressure chamber 65 is an enclosed space defined by the front cover 7, the guide groove 62a, and an outer surface in the axial direction of the clamp piston 42. The supply tube 5c is provided in the frame 5. The supply tube 5c communicates with the pressure chamber 65 at the outside of the frame 5. The supply tube 5c has a pressure oil supply port 5d at an opening end thereof far from the pressure chamber 65. Pressure oil as operating fluid is supplied from the outside through the pressure oil supply port 5d to the pressure chamber 65.

The clamping device 6 of the rotary table device 1 indexes the angular position of the circular table 4 (rotary shaft 2) and holds the angular position by the following procedure.

The rotary shaft 2 is rotationally driven by the DD motor 3, and the angular position of the circular table 4 is indexed. At this time, the piston member 41 is displaceable inward in the axial direction. In particular, gaps are provided in the axial direction between the clamp disk 21 (first clamp portion) and the first pressing portion 43 of the piston member 41, and between the second clamp portion 31 and the second pressing portion 44.

To hold the indexed angular position of the circular table 4 (rotary shaft 2), pressure oil (operating fluid) is supplied to the pressure chamber 65 through the pressure oil supply port 5d and the supply tube 5c. Hence, the pressure of oil in the pressure chamber 65 is increased. The piston member 41 (clamp piston 42) is displaced inward in the axial direction against the biasing force of the return spring 63.

By the displacement of the clamp piston 42, the second pressing portion 44 integrally formed with the clamp piston 42 is also displaced toward the pressure receiving surface 31a of the second clamp portion 31. With the displacement, the inner peripheral surface of the second pressing portion 44 contacts the pressure receiving surface 31a, and is pressed to the pressure receiving surface 31a by the pressure of the pressure oil. Consequently, as described above, the inward pressing force in the radial direction is generated to be applied to the second clamp portion 31.

In an initial state where the second pressing portion 44 contacts the pressure receiving surface 31a of the second clamp portion 31, the gap is provided at least between the clamp disk 21 and the clamp surface 5b of the frame 5, and the gap may be provided between the clamp disk 21 and the first pressing portion 43. Hence, substantially no pressing force acts on the clamp disk 21.

As described above, the second pressing portion 44 has flexibility because of the slits 44a. Hence, when the second pressing portion 44 is pressed to the second clamp portion 31, the second pressing portion 44 is bent in the radial direction (diameter-increasing direction) because of a reactive force. Accordingly, the diameter of a contact part at the inner peripheral surface of the second pressing portion 44 is increased. Thus, even when the second pressing portion 44 is in contact with the second clamp portion 31, the clamp piston 42 (first pressing portion 43) is permitted to be displaced inward in the axial direction. That is, the displacement of the clamp piston 42 is not restricted by the contact between the second pressing portion 44 and the second clamp portion 31. The displacement of the clamp piston 42 is permitted because the second pressing portion 44 is elastically displaced such that the diameter of the inner peripheral surface of the second pressing portion 44 is increased from the state where the second pressing portion 44 is pressed to the second clamp portion 31.

The inner peripheral surface of the second pressing portion 44 and the pressure receiving surface 31a of the second clamp portion 31 have the different taper angles. Owing to this, the inner peripheral surface contacts the pressure receiving surface 31a by a line in the initial state, however, as the second pressing portion 44 is bent, the inner peripheral surface contacts the pressure receiving surface 31a by a plane.

The first pressing portion 43 is displaced inward in the axial direction by the pressure of the pressure oil received by the clamp piston 42 even after the second pressing portion 44 is pressed to the second clamp portion 31. The first pressing portion 43 presses an end part at the outer periphery of the clamp disk 21 (part to be clamped) to the clamp surface 5b of the frame 5. Accordingly, the clamp disk 21 receives the pressing force in the axial direction from the first pressing portion 43. The clamp disk 21 is clamped between the first pressing portion 43 and the clamp surface 5b of the frame 5.

As a result, the rotary shaft 2 is clamped by the pressing forces in the different directions at two positions, the two positions including the second clamp portion 31 which belongs to the rotary shaft 2 and the clamp disk 21 which is relatively non-rotatably assembled with the rotary shaft 2. In particular, the pressure receiving surface 31a of the second clamp portion 31 receives the pressing force (clamping force) applied inward in the radial direction from the second pressing portion 44, and the clamp disk 21 receives the pressing force in the axial direction from the first pressing portion 43. Thus, the rotary shaft 2 is clamped between the first pressing portion 43 and the clamp surface 5b. Hence, with the clamping forces in the radial and axial directions simultaneously generated at the two positions, the angular position of the rotary shaft 2 is rigidly held.

In the above-described example, the inner peripheral surface of the second pressing portion 44 and the outer peripheral surface (pressure receiving surface 31a) of the second clamp portion 31 have the different taper angles. However, the taper angles may be equivalent, and the inner peripheral surface may contact the outer peripheral surface (pressure receiving surface 31a) by an entire plane from the initial state. In such a case, a portion which couples the second pressing portion 44 and the clamp piston 42 (first pressing portion 43), i.e., the coupling portion 45 may have flexibility, and the second pressing portion 44 may be elastically displaced as the coupling portion 45 is bent.

However, with the configuration in which the coupling portion 45 is bent, the second pressing portion 44 contacts the second clamp portion 31 only at the inner end part in the axial direction of the second pressing portion 44 because of the entire displacement of the second pressing portion 44. The second pressing portion 44 may contact the second clamp portion 31 not by a plane, but by a line. Thus, when a larger clamping force is required, the former example is more preferable.

In the above-described example, referring to Fig. 3A, the inner peripheral surface of the second pressing portion 44 and the outer peripheral surface of the second clamp portion 31 are tapered. However, referring to Fig. 3B, a second clamp portion 31 may have a surface extending in the axial direction. Also, in the above-described example, the second clamp portion 31 has a shape such that the tapered outer peripheral surface intersects with a flat surface 31b at the outside in the axial direction, and a corner is provided at the intersection part. However, as shown in Fig. 3B, the intersection part may not have a corner. In particular, the second clamp portion 31 may have a surface extending in the axial direction, and the outer peripheral surface may continuously extend to the flat surface 31b at the outside in the axial direction, so as to form an arcuate surface bulging outward. In this case, the arcuate surface serves as a pressure receiving surface 31a of the second clamp portion 31. By causing the pressing force of the second pressing portion 44 to act on the pressure receiving surface 31a, a force is generated for pressing the second clamp portion 31 in the radial direction.

In the above-described example, a configuration in which the clamp piston 42, the first pressing portion 43, and the second pressing portion 44 are integrally formed, that is, the single piston member 41 has the respective functions. However, these portions may be separately formed and may be assembled.

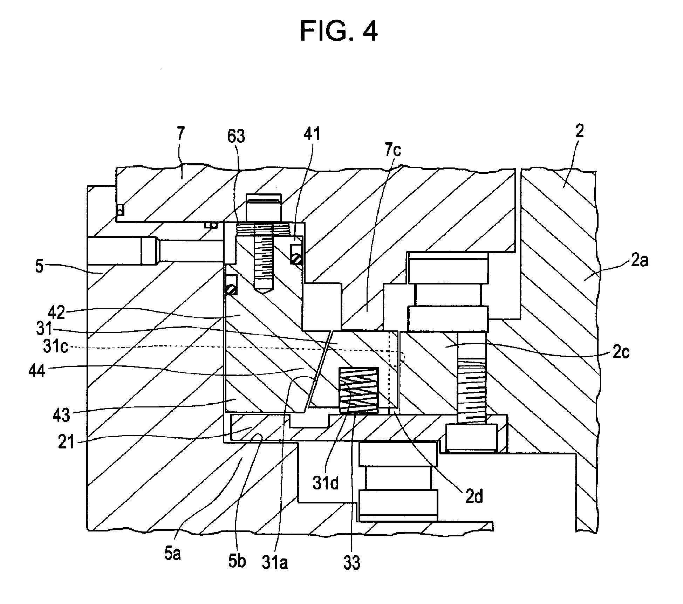

In the above-described example, the second pressing portion 44 is elastically displaced when the second pressing portion 44 is pressed to the second clamp portion 31 (pressure receiving surface 31a). Alternatively, referring to Fig. 4, the second clamp portion 31 may be elastically displaced.

The example shown in Fig. 4 is different from the above-described example in that a second clamp portion 31 is provided separately from the rotary shaft 2, the second clamp portion 31 is provided non-rotatably relative to the rotary shaft 2 but to be displaceable in the axial direction, a biasing member 33 is provided to bias the second clamp portion 31 outward in the axial direction, and a piston member 41 is provided such that a second pressing portion 44 is non-displaceable relative to a clamp piston 42. Details will be described below.

The second pressing portion 44 of the pressing mechanism 40 is not supported by the clamp piston 42 via the coupling portion 45, but the second pressing portion 44 is integrally formed with the clamp piston 42 to define part of the clamp piston 42. Hence, the piston member 41 is configured such that the second pressing portion 44 is not elastically displaceable relative to the clamp piston 42.

The second clamp portion 31 is provided separately from a large-diameter portion 2c of the rotary shaft 2. The second clamp portion 31 is a ring-like clamp member fitted around an outer peripheral surface of the large-diameter portion 2c. At least a protrusion 2d extending in the axial direction is formed at a suitable position in the circumferential direction of the outer peripheral surface of the large-diameter portion 2c of the rotary shaft 2. Also, a groove 31c corresponding to the protrusion 2d is formed at an inner peripheral surface of the second clamp portion 31 (clamp member). When the protrusion 2d of the rotary shaft 2 is fitted into the groove 31c of the clamp member 31, the clamp member 31 is combined so as to be non-rotatable relative to the rotary shaft 2 but movable (slidable) in the axial direction. With the combination, the clamp member 31 may be assumed as part of the rotary shaft 2.

Further, the clamp member 31 faces the clamp disk 21 in the axial direction. A plurality of biasing members 33, serving as compression springs, are arranged between the clamp member 31 and the clamp disk 21, at a plurality of positions in the circumferential direction. Also, housing holes 31d are formed in an inner surface in the axial direction of the clamp member 31. One end parts of the compression springs 33 are fitted into the housing holes 31d. Since the compression springs 33 are arranged, the clamp member 31 is constantly biased outward in the axial direction. When the clamp member 31 does not receive the pressing force from the second pressing portion 44, a gap for displacement is formed between the clamp member 31 and the clamp disk 21.

Further, a stop portion 7c (stopper) is formed in an inner surface in the axial direction of the front cover 7. The stop portion 7c contacts the clamp member 31. When the clamp member 31 does not receive the pressing force from the second pressing portion 44, the clamp member 31 contacts the stop portion 7c, so that outward displacement in the axial direction of the clamp member 31 is restricted and a retraction position thereof is determined.

In the configuration shown in Fig. 4, when the clamp piston 42 receives a pressure of pressure oil and is displaced inward in the axial direction, the second pressing portion 44 contacts the pressure receiving surface 31a of the clamp member 31, and is pressed to the pressure receiving surface 31a. Accordingly, similarly to the above-described example, a pressing force in the radial direction acts on the clamp member 31. With the action, a clamping force in the radial direction acts on the rotary shaft 2.

In addition, when the clamp piston 42 is further displaced inward in the axial direction from the state where the second pressing portion 44 is pressed to the pressure receiving surface 31a of the clamp member 31, the clamp member 31 is displaced inward in the axial direction against the biasing force of the compression springs 33. Hence, the displacement of the clamp piston 42 is not restricted by the contact between the second pressing portion 44 and the clamp member 31. The displacement of the clamp piston 42 is permitted because the clamp member 31 is elastically displaced in the displacement direction of the clamp piston 42 from the state where the second pressing portion 44 is pressed to the clamp member 31.

Further, when the clamp piston 42 is displaced inward in the axial direction, the first pressing portion 43 presses the clamp disk 21, resulting in the clamp disk 21 being clamped between the first pressing portion 43 and the clamp surface 5b of the frame 5. Accordingly, the first pressing portion 43 causes the pressing force to act on the clamp disk 21 while the second pressing portion 44 is pressed to the clamp member 31.

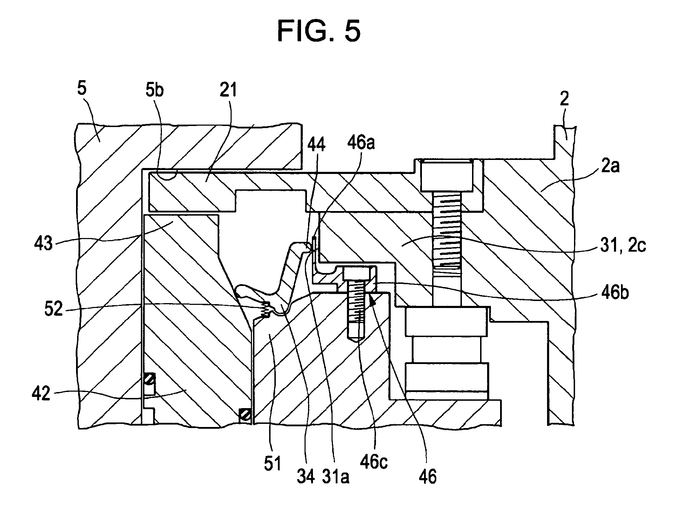

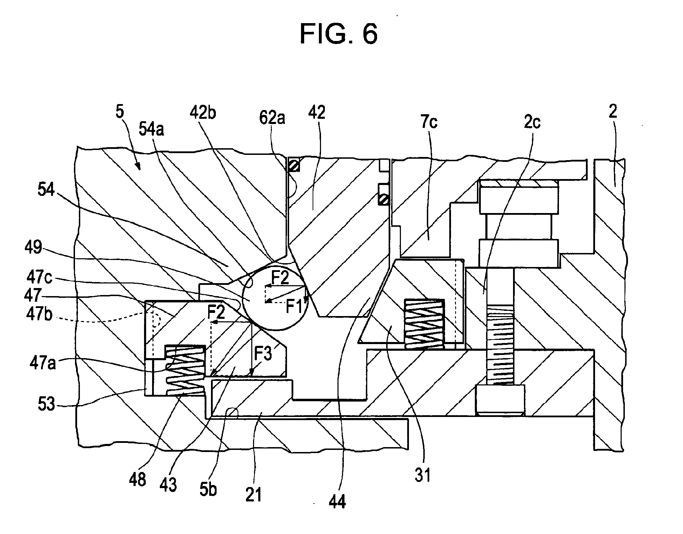

In the above-described two examples, the first pressing portion 43 and the second pressing portion 44 are integrally formed with the clamp piston 42. However, it is not limited thereto. Referring to Figs. 5 and 6, the first pressing portion 43 and the second pressing portion 44 may be members provided separately from the clamp piston 42.

In the example shown in Fig. 5, a second pressing portion 44 is a member provided separately from a clamp piston 42 and a first pressing portion 43. The example shown in Fig. 5 is different from the first example in that a lever 34 including a second pressing portion 44 is supported swingably by a support portion 51 of a frame 5, the lever 34 swings by reciprocation of a clamp piston 42, and the second pressing portion 44 presses a second clamp portion 31 by advancement of the clamp piston 42.

Also, in the example shown in Fig. 5, a clamp disk 21 is provided at a side of the clamp piston 42 near the circular table. Though not illustrated, a pressure chamber 65, a return spring 63, etc., are provided at another side of the clamp piston 42 far from the circular table. Hence, the clamp piston 42 can reciprocate in the axial direction. Part of an inner peripheral surface of the clamp piston 42 at a side far from the circular table with respect to a first pressing portion 43 is tapered such that the diameter of this part is decreased outward in the axial direction from the clamp disk 21.

A plurality of levers 34 (preferably, at least three in view of balance) are arranged at intervals along an outer peripheral surface of the second clamp portion 31, which is a large-diameter portion 2c of the rotary shaft 2. Here, the outer peripheral surface of the large diameter portion 2c serves as a pressure receiving surface 31a which is a surface extending in the axial direction.

Each lever 34 is a member which is bent to be a substantially L-like shape. A bent part of the lever 34 is supported by the frame 5. One end of the lever 34 contacts the tapered part formed at the inner peripheral surface of the clamp piston 42, and another end thereof (indirectly) contacts the outer peripheral surface of the large-diameter portion 2c (corresponding to the second clamp portion 31) of the rotary shaft 2. That is, the lever 34 has the fulcrum at the bent part, the effort at the one end, and the load at the another end. The bent part of the lever 34 is positioned by recess-protrusion fitting with respect to the support portion 51 of the frame 5. Here, the bent part spherically bulges whereas the support portion 51 of the frame 5 is spherically recessed to correspond to the convex shape.

The lever 34 is formed such that a distance from the bent part (fulcrum) to the another end (load) is longer than a distance from the bent part to the one end (effort). Hence, a force acting on the effort is increased and acts on the load (second clamp portion 31). That is, the lever 34 at a pressing mechanism 40 including the second pressing portion 44 has force increasing action. Thusly, the pressing mechanism 40 has a force increasing portion.

With this configuration, when the clamp piston 42 is displaced inward in the axial direction, the one end of the lever 34 contacts the tapered inner peripheral surface of the clamp piston 42, so that a pressing force acts on the one end. By the action, the lever 34 rotates clockwise in the drawing around the bent part. By the rotation, the another end is displaced substantially in the radial direction, and hence, a pressing force in the radial direction is generated to be applied to the second clamp portion 31.

As described above, the lever 34 generates the pressing force in the radial direction to be applied to the outer peripheral surface of the second clamp portion 31 as a result of that the lever 34 receives the pressing force in the axial direction from the clamp piston 42. Thus, the lever 34 corresponds to the second pressing portion 44 and a pressing force conversion portion.

Further, the lever 34 has flexibility. Accordingly, the lever 34 is elastically deformed even from the state where the load (second pressing portion 44) contacts the outer peripheral surface of the second clamp portion 31, resulting in the clamp piston 42 being permitted to be displaced inward in the axial direction. Accordingly, the pressing force can act on the clamp disk 21 by the clamp piston 42 (first pressing portion 43).

Also, in the illustrated example, a pressing member 46 is arranged between the lever 34 and the second clamp portion 31. The pressing member 46 includes a thin cylindrical portion 46a surrounding the second clamp portion 31. The pressing member 46 includes a fixed portion 46b continuously extending from an outer side in the axial direction of the cylindrical portion 46a. The fixed portion 46b is fixed to the support portion 51 of the frame 5 by a screw 46c. The cylindrical portion 46a of the pressing member 46 is deformable at least in a diameter-decreasing direction because the cylindrical portion 46a is thin. The pressing force of the second pressing portion 44 acts on the second clamp portion 31 via the cylindrical portion 46a of the pressing member 46.

With this configuration, although the pressing force in the radial direction by the lever 34 acts on part of the entire circumference of the cylindrical portion 46a, the cylindrical portion 46a is deformed in the diameter-decreasing direction by the partly acting pressing force in the radial direction. Accordingly, the pressing force acts on the entire circumference of the outer peripheral surface of the second clamp portion 31.

In the illustrated example, a compression spring 52 is arranged between the lever 34 and the support portion 51 of the frame 5. The compression spring 52 keeps the state where the second pressing portion 44 of the lever 34 constantly contacts the cylindrical portion 46a of the pressing member 46. The compression spring 52 constantly biases the lever 34 clockwise in the drawing. Herein, the compression spring 52 has a spring force which does not deform the cylindrical portion 46a. With the compression spring 52, the position of the lever 34 is kept and the lever 34 does not fall even when the clamp piston 42 does not contact the load.

In the example shown in Fig. 6, a first pressing portion 43 is a member provided separately from a clamp piston 42. Also, the example shown in Fig. 6 is different from the example shown in Fig. 4 in that a frame-side clamp member 47 including the first pressing portion 43 can reciprocate in the axial direction, the first pressing portion 43 is biased outward in the axial direction by a biasing member 48 so as to be separated from a clamp disk 21, a ball member 49 is housed in a space defined by the first pressing portion 43, a frame 5, and the clamp piston 42, the ball member 49 contacts three members of the first pressing portion 43, the frame 5, and the clamp piston 42 respectively by points, and reciprocation in the axial direction of the clamp piston 42 is converted into motion in a direction obliquely intersecting with the axial direction of the ball member 49 and then is transmitted to the first pressing portion 43.

The clamp member 47 (frame-side clamp member) is provided at an A-surface side of the clamp disk 21 at an end part near an outer periphery (part to be clamped) of the clamp disk 21. The clamp member 47 is provided separately from the clamp piston 42. The frame-side clamp member 47 is a ring-like member which is inserted into an inner peripheral surface of the frame 5. The frame-side clamp member 47 is slidable in the axial direction. Also, an inner surface in the axial direction of the frame-side clamp member 47 at the inner peripheral side thereof faces in the axial direction the A surface at the end part near the outer periphery of the clamp disk 21. Accordingly, the inner part in the axial direction of the frame-side clamp member 47 near the inner periphery thereof corresponds to the first pressing portion 43.

The frame-side clamp member 47 is biased outward in the axial direction by the compression spring, which is the biasing member 48, so as to be constantly separated from the clamp disk 21. The biasing member 48 is arranged between the frame-side clamp member 47 and the frame 5 at a position outside in the radial direction with respect to an outer edge of the clamp disk 21. In addition, when no pressing force is applied from the clamp piston 42, the frame-side clamp member 47 has a gap for displacement between the frame-side clamp member 47 and the clamp disk 21. Similarly to the compression springs 33 provided at the second clamp portion 31, a plurality of compression springs 48 are arranged at a plurality of positions in the circumferential direction. The frame-side clamp member 47 has a housing hole 47a to which one end part of each compression spring 48 is fitted.

At least a protrusion 53 is formed at a suitable position in the circumferential direction of the inner peripheral surface of the frame 5. The frame-side clamp member 47 slides on the inner peripheral surface. The protrusion 53 extends in the axial direction. Also, a groove 47b corresponding to the protrusion 53 is formed at the outer peripheral surface of the frame-side clamp member 47. By fitting the protrusion 53 into the groove 47b, the frame-side clamp member 47 is attached to the frame 5 non-rotatably relative to the frame 5 but movably (slidably) in the axial direction.

A plurality of ball members 49 are provided between the frame-side clamp member 47 and the clamp piston 42, at suitable positions in the circumferential direction. In particular, a tapered surface 47c is formed at an outer part in the axial direction of the inner peripheral surface of the frame-side clamp member 47. The inner diameter of the tapered surface 47c is decreased inward in the axial direction. Also, a tapered surface 42b is formed at an inner part in the axial direction of an outer peripheral surface of the clamp piston 42. The outer diameter of the tapered surface 42b is decreased inward in the axial direction. In addition, a step portion 54 is formed at the frame 5 at an outer part in the axial direction with respect to the frame-side clamp member 47. The step portion 54 extends outward in the radial direction with respect to a guide groove 62a. A tapered surface 54a is formed at an inner part in the axial direction of an inner peripheral surface of the step portion 54. The diameter of the tapered surface 54a is increased inward in the axial direction. The plurality of ball members 49 are arranged in a circular space surrounded by the three tapered surfaces 47c, 42b, and 54a, at suitable positions in the circumferential direction. The ball members 49 may be provided over the entire circumference in contact state, or at intervals in the circumferential direction.

With this configuration, a pressing force (F1 in the drawing) acting on the ball members 49 by the clamp piston 42 is increased and acts on the clamp disk 21. In particular, similarly to the example in Fig. 4, when the second pressing portion 44 of the clamp piston 42 contacts the rotary-shaft-side clamp member, which is the second clamp member 31, and then causes the rotary-shaft-side clamp member 31 to be elastically displaced and to be further displaced in the axial direction, a pressing force F1 in the axial direction acts on the ball members 49. By cam action (wedge effect) of the tapered surface 42b of the clamp piston 42, the pressing force F1 in the axial direction is increased and becomes a force F2 directed outward in the radial direction. The force F2 acts on the ball members 49. Further, at the contact part between the ball members 49 and the frame-side clamp member 47, by cam action of the tapered surface 47c of the frame-side clamp member 47, the pressing force F2 in the radial direction acts as a force F3 directed inward in the axial direction. Accordingly, the frame-side clamp member 47 is displaced inward in the axial direction against the spring force of the compression springs 48. The frame-side clamp member 47 presses the clamp disk 21 to the clamp surface 5b of the frame 5.

The present invention is not limited to the above-described examples. For example, the first clamp portion 21, the second clamp portion 31, the first pressing portion 43, the second pressing portion 44, etc. may not be provided at the outside in the radial direction of the rotary shaft 2. These portions may be provided at the inside in the radial direction of the rotary shaft 2.

## Claims

1. A clamping device (6) of an indexing device (1) for a machine tool, the clamping device (6) being configured to hold an indexed angular position of a main shaft (2), the clamping device (6) comprising:
a clamp section (20) being non-rotatable relative to the main shaft (2) which is rotationally driven; and
a pressing mechanism (40) including a clamp piston (42) which is displaceable in an axial direction of the main shaft (2), and being configured to cause a pressure of operating fluid received by the clamp piston (42) to act on the clamp section (20),
wherein the clamp section (20) includes
a clamp disk (21) being non-rotatable relative to the main shaft (2), and serving as a first clamp portion, and
a second clamp portion (31) being part of the main shaft (2) or a member rotatable with the main shaft (2), and having a pressure receiving surface (31a) extending in a direction intersecting with a radial direction of the main shaft (2),
wherein the pressing mechanism (40) includes
a first pressing portion (43) facing the clamp disk (21) and arranged between the clamp piston (42) and the clamp disk (21), and
a second pressing portion (44) facing the pressure receiving surface (31a) of the second clamp portion (31) and arranged between the clamp piston (42) and the second clamp portion (31),
wherein one of the second clamp portion (31) and the second pressing portion (44) of the pressing mechanism (40), which are brought into a contact state when the clamp piston (42) receives the pressure of the operating fluid, includes a pressing force conversion portion which generates a pressing force in the radial direction of the main shaft (2) to be applied to the pressure receiving surface (31a) of the second clamp portion (31) when the pressing force conversion portion receives a pressing force in the axial direction acting thereon via the clamp piston (42), and
wherein at least one of the second clamp portion (31) and the second pressing portion (44) is elastically displaceable to permit the clamp piston (42) to be displaced in the axial direction when the second pressing portion (44) causes a pressing force to act on the second clamp portion (31).
